# EUROPEAN PATENT APPLICATION

(11) **EP 2 958 041 A1**
(43) Date of publication of application: **23.12.2015**
(21) Application number: 15171456.5
(22) Date of filing: 10.06.2015
(51) Int. Cl.: G06F 21/34, H04L 29/06

(54) **AUTHENTICATION METHODS AND SYSTEMS FOR WEARABLE ELECTRONIC DEVICES**

(30) Priority: 18.06.2014 TW 103120969
(71) Applicant: Noodoe Corporation, Taipei City 115 (TW)
(72) Inventor: Hu, Ying-Chieh, 115 Taipei City (TW); Yeh, Nai-Kun, 115 Taipei City (TW)
(74) Representative: Karakatsanis, Georgios

(57) **Abstract**

Authentication methods and systems for wearable electronic devices (200) are provided. First, an operational state of a wearable electronic device (200) is obtained. When the operational state is changed, an authentication process is performed, and the wearable electronic device (200) is allowed to be accessed based on the result of the authentication process.

## Description

### BACKGROUND

### Technical Field

The disclosure relates generally to authentication methods and systems for wearable electronic devices, and, more particularly to methods and systems that can activate an authentication process according to an operational state of a wearable electronic device.

### Description of the Related Art

Recently, electronic devices, such as smart phones, tablets, notebooks, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

On the other hand, with the coming of IOT (Internet Of Things) generation, every device or object can connect to networks, and users can access and control these devices or objects via the networks. Currently, wearable electronic devices have become the most tangible applications of IOT. In some cases, the wearable device can detect health information of a user, record exercise information and sleep patterns, or display email messages or incoming calls.

Due to the capabilities and physical properties of wearable device, a user typically wears the device for a long time, and the wearable device can record related information of the user at any time. In some cases, important data, such as identification data or electronic wallet of the user may be recorded in the wearable device. When the user takes off the wearable device, the important data may be leaked if other users obtain the wearable device.

### SUMMARY

Authentication methods and systems for wearable electronic devices are provided, wherein an authentication process is determined to be activated in the wearable electronic device according to an operational state of the wearable electronic device.

In an embodiment of an authentication method for wearable electronic devices, an operational state of a wearable electronic device is obtained. When the operational state is changed, an authentication process is performed. After the authentication process, the wearable electronic device is allowed to be accessed based on the result of the authentication process.

An embodiment of an authentication system for wearable electronic devices comprises a storage unit and a processing unit. The storage unit records an operational state of a wearable electronic device. When the operational state is changed, the process unit performs an authentication process. After the authentication process, the process unit allows the wearable electronic device to be accessed based on the result of the authentication process.

In some embodiments, the authentication process is performed by first determining whether the wearable electronic device connects to a specific electronic device. When the wearable electronic device connects to the specific electronic device, the wearable electronic device enters a first mode. When the wearable electronic device does not connect to the specific electronic device, it is determined whether authentication data is received. When the received authentication data matches preset data in the wearable electronic device, the wearable electronic device enters a second mode. The access authority to access the wearable electronic device in the first mode and that in the second mode are different.

In some embodiments, when the authentication data is not received or the received authentication data does not match the preset data in the wearable electronic device, the wearable electronic device is locked.

In some embodiments, the wearable electronic device comprises at least one motion sensor for detecting a motion corresponding to the wearable electronic device, wherein the authentication data comprises the motion.

In some embodiments, when the operational state of the wearable electronic device changes from a first operational state to a second operational state, the authentication process is performed. When the operational state of the wearable electronic device changes from the second operational state to the first operational state, a security protection mechanism for the wearable electronic device is performed.

In some embodiments, the wearable electronic device comprises a main body and a connecting component. When the main body does not connect with the connecting component, the operational state of the wearable electronic device is in the first operational state. When the main body connects with the connecting component, the operational state of the wearable electronic device is in the second operational state.

Authentication methods for wearable electronic devices may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of an authentication system for wearable electronic devices of the invention;
Fig. 2 is a schematic diagram illustrating an embodiment of a main body and a connecting component of the invention;
Fig. 3 is a schematic diagram illustrating an embodiment of a wearable electronic device having a main body and a connecting component of the invention;
Fig. 4 is a flowchart of an embodiment of an authentication method for wearable electronic devices of the invention;
Fig. 5 is a flowchart of another embodiment of an authentication method for wearable electronic devices of the invention; and
Fig. 6 is a flowchart of an embodiment of an authentication process of the invention.

### DETAILED DESCRIPTION OF THE INVENTION

Authentication methods and systems for wearable electronic devices are provided.

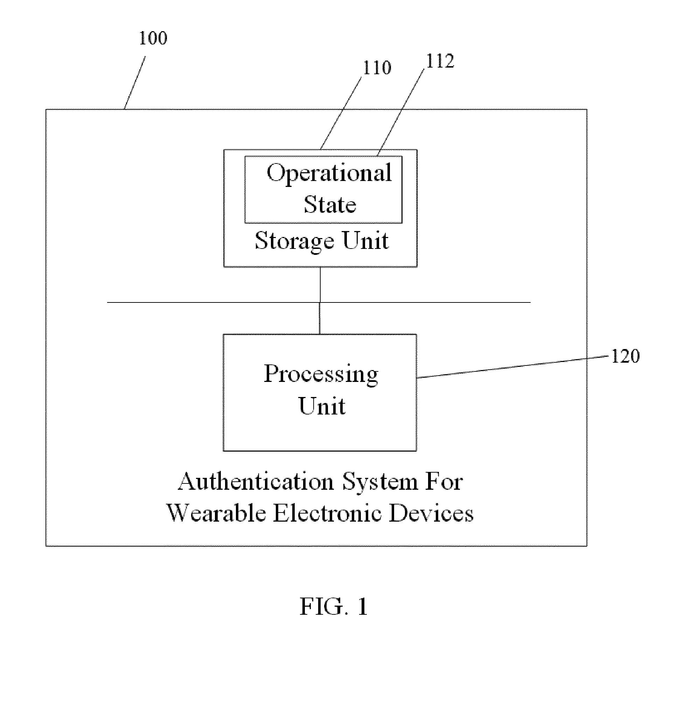

Fig. 1 is a schematic diagram illustrating an embodiment of an authentication system for wearable electronic devices of the invention. The authentication system for wearable electronic devices can be used in a wearable electronic device. It is noted that, the wearable electronic device can be worn on any portion of an object, such as a user or an animal.

The authentication system for wearable electronic devices 100 can comprise a storage unit 110 and a processing unit 120. The storage unit 110 records an operational state 112 of the wearable electronic device. It is understood that, in some embodiments, the operational state 112 represents the wearing situation of the wearable electronic device. In some embodiments, the wearable electronic device can comprise a fastener, which can be opened or closed to allow a user to fasten the wearable electronic device to be a loop, such that the wearable electronic device can be worn on the user. In some embodiments, the wearable electronic device can comprise a main body and a connecting component. When the main body does not connect with the connecting component, the operational state of the wearable electronic device is in a first operational state, such as an open state. When the main body connects with the connecting component, the operational state of the wearable electronic device is in a second operational state, such as a closed state. It is noted that, in some embodiments, the access authorities to access the wearable electronic device in different operational states may be different. It is understood that, the access authority may be defined as a set of hardware and/or software elements of the wearable electronic device which can be accessed in a specific operational state. The processing unit 120 can control related operations of hardware and software in the wearable electronic device, and perform the authentication methods for wearable electronic devices of the invention, which will be discussed later.

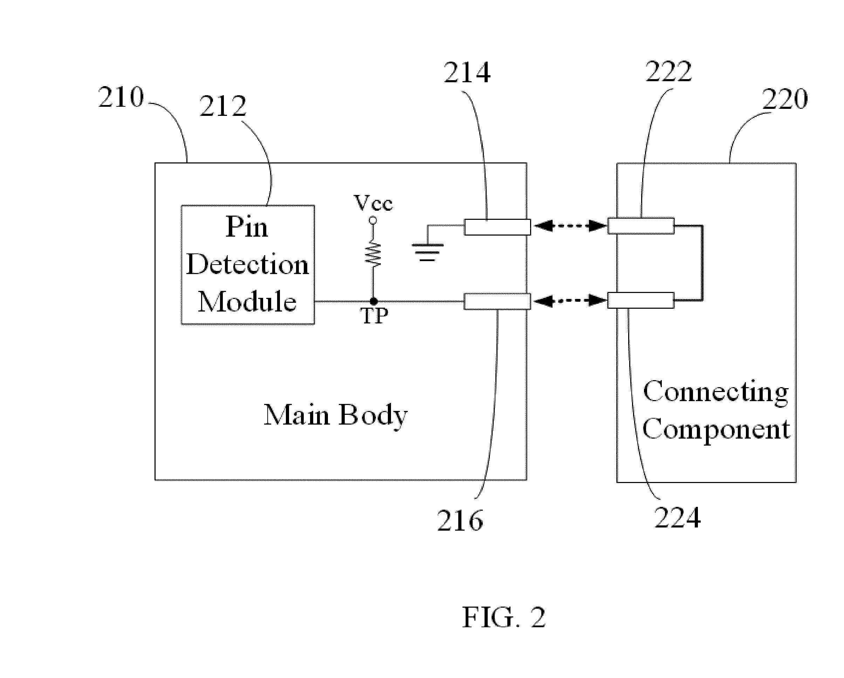

Fig. 2 is a schematic diagram illustrating an embodiment of a main body and a connecting component of the invention. As shown in Fig. 2, the main body 210 comprises a pin detection module 212, and at least two pin, such as a first pin 214 and a second pin 216. The pin detection module 212 couples to the first pin 214 or the second pin 216 to determine the operational state of the electronic device. It is understood that, in some embodiments, the first pin 214 and the second pin 216 may be spring loaded connectors, such as Pogo pins. The connecting component 220 can connect with the main body 210, such that the first pin 214 and the second pin 216 of the main body 210 are conducted. In the embodiment, the connecting component 220 can comprise a third pin 222 and a fourth pin 224, which are connected with each other. When the connecting component 220 and the main body 210 are connected, the third pin 222 of the connecting component 220 connects to the first pin 214 of the main body 210, and the fourth pin 224 of the connecting component 220 connects to the second pin 216 of the main body 210, such that the first pin 214 and the second pin 216 conduct current. As described, the operational state of the wearable electronic device may comprise a first operational state and a second operational state. It is noted that, in some embodiments, the first pin 214 and the second pin 216 are open when the wearable electronic device is in the first operational state. When the pin detection module 212 detects that the first pin 214 and the second pin 216 conduct current, the pin detection module 212 drives the wearable electronic device to change its operational state from the first operational state to the second operational state.

It is noted that, in the example of Fig. 2, the first pin 214 can connect to the ground, and a power Vcc can be provided to the second pin 216. The pin detection module 212 can couple to the second pin 216, and detects the electric potential corresponding to a testing point TP to determine the operational state of the wearable electronic device. In the example, when the electric potential corresponding to the testing point TP is high, that is the first pin 214 and the second pin 216 are open, the operational state of the wearable electronic device is in the first operational state. When the electric potential corresponding to the testing point TP is low, that is the first pin 214 and the second pin 216 conduct current, the operational state of the wearable electronic device is in the second operational state. It is understood that, the circuit for detecting whether the first pin 214 and the second pin 216 conduct current can be implemented according to different designs and requirements.

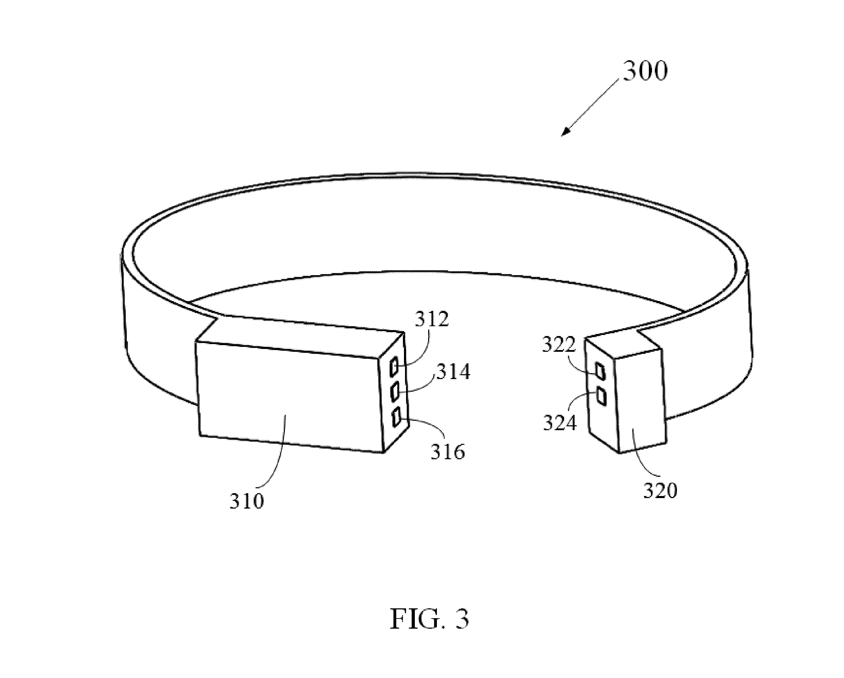

Fig. 3 is a schematic diagram illustrating an embodiment of a wearable electronic device having a main body and a connecting component of the invention. As shown in Fig. 3, the wearable electronic device 300 comprises a main body 310 and a connecting component 320. The main body 310 comprises a first pin 312, a second pin 314, and a third pin 316, wherein the first pin 312 and the second pin 314 are open in the main body 310. The third pin 316 of the main body 310 can be used for charging. The connecting component 320 can comprise a first pin 322 and a second pin 324, which are connected with each other in the connecting component 320. When the user takes off the wearable electronic device 300, the first pin 312 and the second pin 314 of the wearable electronic device 30 are open, and the operational state of the wearable electronic device 300 enters the first operational state. When the user wears the wearable electronic device 300, that is the connecting component 320 and the main body 310 are connected, the first pin 322 of the connecting component 320 contacts with the first pin 312 of the main body 310, and the second pin 324 of the connecting component 320 contacts with the second pin 314 of the main body 310, such that the first pin 312 and the second pin 314 of the main body 310 conduct current, and the operational state of the wearable electronic device 300 enters the second operational state.

It is understood that, the mechanisms for detecting the operational state of the wearable electronic device in Figs. 2 and 3 are examples of the application, and the present invention is not limited thereto. For example, a magnetic induction manner can be used for determining whether the pins conduct current. Any hardware and/or software mechanism which can determine the operational state of the wearable electronic device can be used in the present invention.

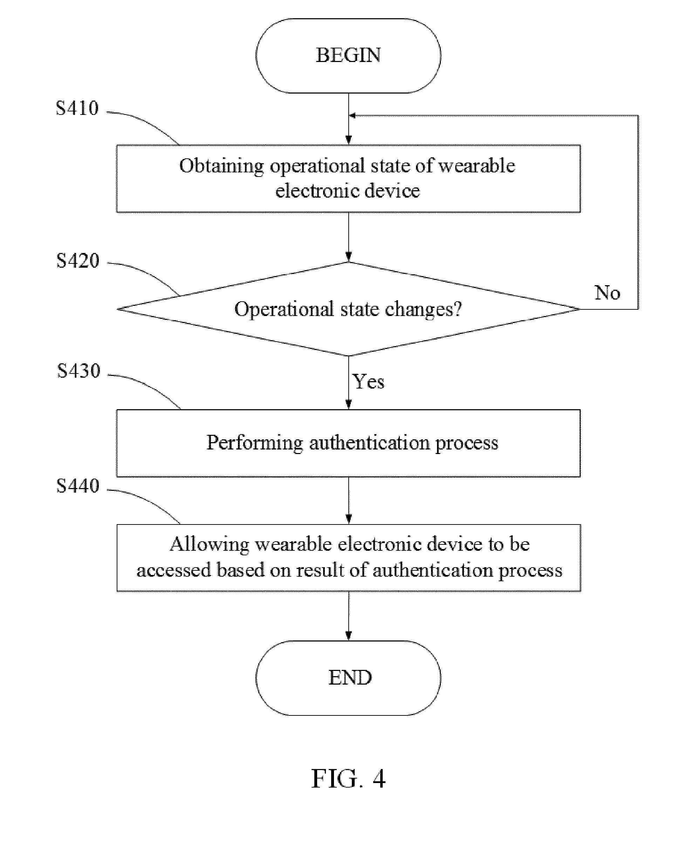

Fig. 4 is a flowchart of an embodiment of an authentication method for wearable electronic devices of the invention. The authentication method for wearable electronic devices can be used in a wearable electronic device.

In step S410, an operational state of the wearable electronic device is obtained. It is understood that, in some embodiments, the operational state of the wearable electronic device can be determined according to the manner disclosed in Fig. 2. It is noted that, the invention is not limited to any manner for determining the operational state. In step S420, it is determined whether the operational state of the wearable electronic device is changed. It is understood that, in some embodiments, the determination of whether the operational state is changed is performed by determining whether the operational state of the wearable electronic device is changed from an open state to a closed state. When the operational state of the wearable electronic device is not changed (No in step S420), the procedure returns to step S410. When the operational state of the wearable electronic device is changed (Yes in step S420), in step S430, an authentication process is performed. After the authentication process, in step S440, the wearable electronic device is allowed to be accessed based on the result of the authentication process. It is noted that, in the embodiment, once the operational state of the wearable electronic device is changed, the wearable electronic device will perform the authentication process, and determine whether to allow the wearable electronic device to be accessed according to the result of the authentication process. It is noted that, the authentication process ensures that the wearable electronic device is legally authorized and used, and the detail of the authentication process can be designed according to different requirements and applications.

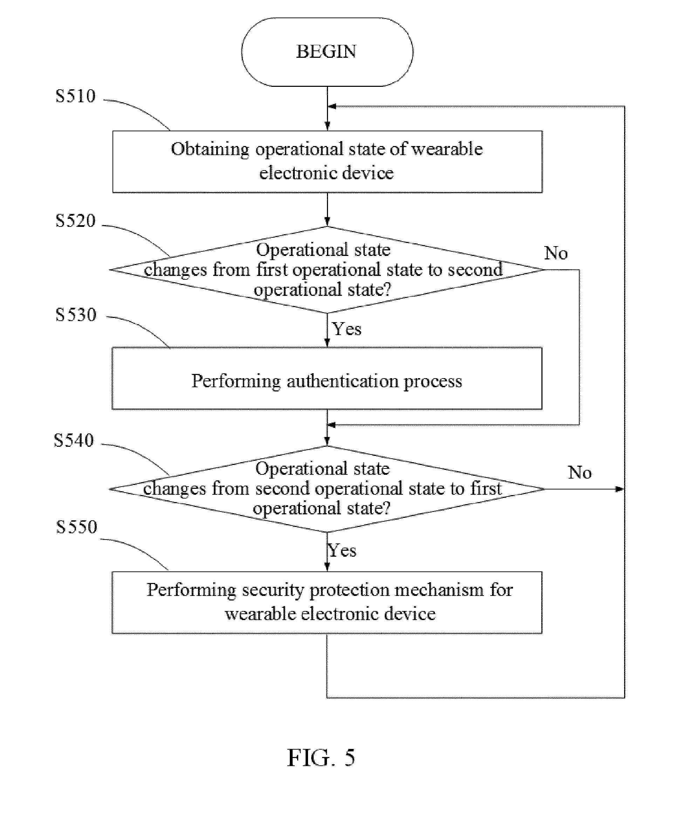

Fig. 5 is a flowchart of another embodiment of an authentication method for wearable electronic devices of the invention. The authentication method for wearable electronic devices can be used in a wearable electronic device.

In step S510, an operational state of the wearable electronic device is obtained. Similarly, in some embodiments, the operational state of the wearable electronic device can be determined according to the manner disclosed in Fig. 2. However, the invention is not limited to any manner for determining the operational state. In step S520, it is determined whether the operational state of the wearable electronic device is changed from a first operational state to a second operational state. It is understood that, in some embodiments, when a user takes off the wearable electronic device, the operational state of the wearable electronic device is the first operational state. When the user wears the wearable electronic device, the operational state of the wearable electronic device is the second operational state. When the operational state of the wearable electronic device is not changed from the first operational state to the second operational state (No in step S520), the procedure goes to step S540. When the operational state of the wearable electronic device is changed from the first operational state to the second operational state (Yes in step S520), in step S530, an authentication process is performed. Similarly, the authentication process ensures that the wearable electronic device is legally authorized and used, and the detail of the authentication process can be designed according to different requirements and applications. In step S540, it is determined whether the operational state of the wearable electronic device is changed from the second operational state to the first operational state. When the operational state of the wearable electronic device is not changed from the second operational state to the first operational state (No in step S540), the procedure returns to step S510. When the operational state of the wearable electronic device is changed from the second operational state to the first operational state (Yes in step S540), in step S550, a security protection mechanism for the wearable electronic device is performed. It is understood that, in some embodiments, the security protection mechanism performs an encryption process for the wearable electronic device. In some embodiments, the security protection mechanism performs an access control for the hardware and/or software of the wearable electronic device. For example, the hardware and/or software of the wearable electronic device that can be accessed/operated in the first operational state is more limited than that in the second operational state.

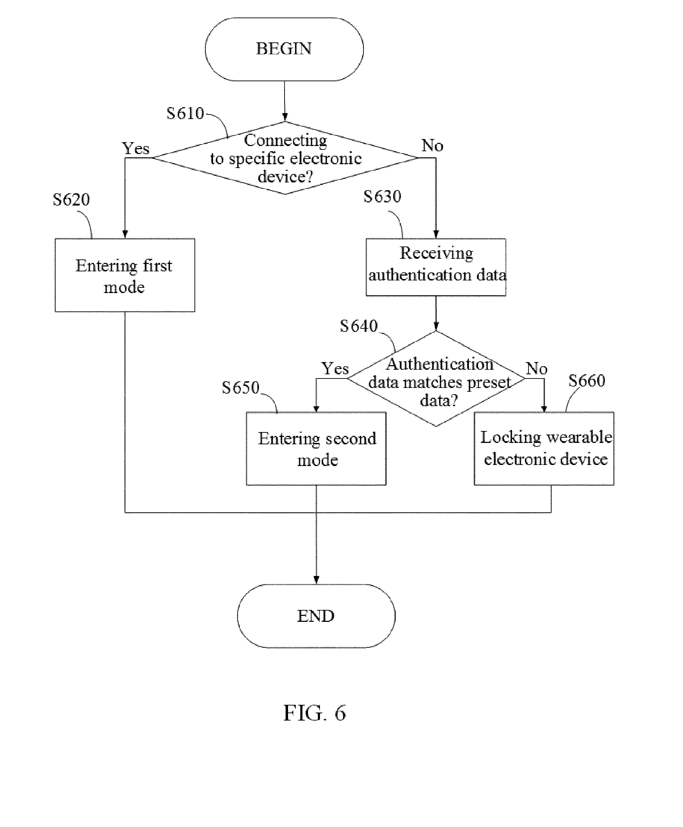

As described, when the operational state of the wearable electronic device is changed from the first operational state to the second operational state, an authentication process is performed on the wearable electronic device. Fig. 6 is a flowchart of an embodiment of an authentication process of the invention.

In step S610, it is determined whether the wearable electronic device connects to a specific electronic device, such as a smartphone, a tablet, or any home appliance. It is understood that, in some embodiments, the wearable electronic device can connect to the specific electronic device via a wireless network, such as Wi-Fi or Bluetooth network. When the wearable electronic device connects to the specific electronic device, and is paired to the specific electronic device (Yes in step S610), in step S620, the wearable electronic device enters a first mode of the second operational state. When the wearable electronic device does not connect to the specific electronic device (No in step S610), in step S630, authentication data is received. It is understood that, in some embodiments, the authentication data may be texts, numerals, and/or a sound. In some embodiments, the wearable electronic device can comprise at least one motion sensor for detecting a motion corresponding to the wearable electronic device. The authentication data can comprise the motion. In step S640, it is determined whether the received authentication data matches preset data in the wearable electronic device. When the received authentication data matches the preset data in the wearable electronic device (Yes in step S640), in step S650, the wearable electronic device enters a second mode of the second operational state. It is noted that, in some embodiments, the access authority to access the wearable electronic device in the first mode of the second operational state and that in the second mode of the second operational state are different. The access authority may be defined as a set of hardware and/or software of the wearable electronic device which can be accessed in a specific mode. When the received authentication data does not match the preset data in the wearable electronic device (No in step S640), in step S660, the wearable electronic device is locked. It is noted that, in some embodiments, when the received authentication data does not match the preset data for three times, the wearable electronic device is locked.

It is understood that again, the authentication process ensures that the wearable electronic device is legally authorized and used, and the detail of the authentication process can be designed according to different requirements and applications. The embodiment of Fig. 6 is an example of the application, and the present invention is not limited thereto.

Therefore, the authentication methods and systems for wearable electronic devices of the present invention can determine whether to activate an authentication process according to the operational state of the wearable electronic device and the change of the operational state, thereby increasing the security of wearable electronic devices.

Authentication methods for wearable electronic devices may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. An authentication method for wearable electronic devices (200) for use in a wearable electronic device (200), comprising:
obtaining an operational state of the wearable electronic device (200);
performing an authentication process when the operational state is changed; and
after the authentication process, allowing the wearable electronic device (200) to be accessed based on the result of the authentication process.

2. The method of claim 1, wherein the authentication process is performed as follows:
determining whether the wearable electronic device (200) connects to a specific electronic device;
when the wearable electronic device (200) connects to the specific electronic device, driving the wearable electronic device (200) to enter a first mode;
when the wearable electronic device (200) does not connect to the specific electronic device, determining whether authentication data is received; and
when the received authentication data matches preset data in the wearable electronic device (200), driving the wearable electronic device (200) to enter a second mode,
wherein the access authority to access the wearable electronic device (200) in the first mode and that in the second mode are different.

3. The method of claim 2, further comprising a step of driving the wearable electronic device (200) to be locked when the authentication data is not received or the received authentication data does not match the preset data in the wearable electronic device (200).

4. The method of claim 2, wherein the wearable electronic device (200) comprises at least one motion sensor for detecting a motion corresponding to the wearable electronic device (200), and the authentication data comprises the motion.

5. The method of claim 1, 2, 3 or 4, wherein when the operational state of the wearable electronic device (200) changes from a first operational state to a second operational state, the authentication process is performed, and the method further comprises a step of performing a security protection mechanism for the wearable electronic device (200) when the operational state of the wearable electronic device (200) changes from the second operational state to the first operational state.

6. The method of claim 1, 2, 3, 4 or 5, wherein the wearable electronic device (200) comprises a main body (210) and a connecting component (220), the operational state of the wearable electronic device (200) is in the first operational state when the main body (210) does not connect with the connecting component (220), and the operational state of the wearable electronic device (200) is in the second operational state when the main body (210) connects with the connecting component (220).

7. An authentication system (100) for wearable electronic devices (200) for use in a wearable electronic device (200), comprising:
a storage unit (110) recording an operational state of the wearable electronic device; and
a processing unit (120) performing an authentication process when the operational state is changed, and after the authentication process, allowing the wearable electronic device (200) to be accessed based on the result of the authentication process.

8. A machine-readable storage medium comprising a computer program, which, when executed, causes a device to perform an authentication method for wearable electronic devices (200), wherein the method comprises:
obtaining an operational state of a wearable electronic device (200);
performing an authentication process when the operational state is changed; and
after the authentication process, allowing the wearable electronic device (200) to be accessed based on the result of the authentication process.
